# EUROPEAN PATENT SPECIFICATION

(11) **EP 1 366 318 B1**
(45) Date of publication and mention of the grant of the patent: **25.05.2005**
(21) Application number: 02701816.7
(22) Date of filing: 04.03.2002
(51) Int. Cl.: F16L 19/08

(54) **COUPLING FOR CONNECTION OF A TUBE OR HOSE BY PUSHING-IN**
KUPPLUNG ZUR VERBINDUNG EINES ROHRS ODER SCHLAUCHS DURCH EINSCHIEBEN
COUPLAGE POUR LE RACCORDEMENT D'UN TUBE OU D'UN FLEXIBLE PAR POUSSEE

(30) Priority: 05.03.2001 NO 20011127
(43) Date of publication of application: 03.12.2003
(73) Proprietor: Raufoss Water & Gas AS, 2831 Raufoss (NO)
(72) Inventor: SLATTSVEEN, Tore, N-2830 Raufoss (NO)
(74) Representative: Resch, Michael, Dipl.-Phys.
(86) International application number: PCT/NO2002/000087
(87) International publication number: WO 2002/070940

(56) References cited:
- EP-A1- 0 083 135
- EP-A1- 1 063 463
- NO-B1- 309 911
- SE-B- 361 518

## Description

### Field of the invention.

The invention relates to a coupling for connection of a tube or hose by pushing-in, comprising a coupling housing formed of one single part or of two parts which are screwed together, a clamping ring and a sealing, for instance an O-ring, where at least the clamping ring is in engagement with an inner conical surface in the coupling housing. The clamping ring may be split.

When the part being inserted in the following is called "tube", this may also mean "hose".

### Prior art.

A tube coupling of the above mentioned type is known from NO Patent 149598. The coupling housing consists of two housing parts, whereby the clamping ring and the adjacent gasket may be placed between the housing parts prior to connecting these by means of a threaded connection. Oppositely of the clamping ring, seen relatively to the direction of insertion of the tube, the gasket abuts an end surface on one of the housing parts. In order to assure that the clamping ring, upon the connecting, may retain the tube in the coupling housing, the cavity in the other housing part has a tapering or conical portion which the clamping ring abuts. The clamping ring has been given a suitable cross sectional shape which, in cooperation with said tapering portion, provides that the tube is retained if, upon the connecting, an attempt is made to withdraw the tube from the coupling housing.

During insertion of a tube in such a coupling the tube is forced through the clamping ring and the O-ring, and is usually moved into end abutment against a step in the coupling. The insertion causes thai the damping ring and the O-ring are brought somewhat along by the tube, whereby the clamping ring and the O-ring are moved somewhat along the conical surface, towards the largest end thereof. This results in that the damping ring clamps the tube only after the tube is pulled somewhat backwardly relatively to the direction of insertion. Similarly, the O-ring, when lying against the same conical surface as the clamping ring, increases its pressure against the tube after the tube is pulled somewhat backwardly. Such back-pulling forces the clamping ring and the O-ring in the direction of taper of the conical surface and, therefore, causes compression of the rings.

EP 0083135 describes a coupling containing a clamping ring, a centering ring and a sealing ring provided successively in said order in the direction of insertion of a tube or hose. The centering ring has an axial extension in the direction of the clamping ring. A tube or hose being inserted in the coupling will expand the clamping ring and deform the sealing ring.

The invention provides a coupling which resists that the clamping ring and possibly also the seating ring are brought along by the tube being forced into the coupling.

### Brief explanation of the invention.

According to the invention a return ring is provided in the housing behind the clamping ring as seen in the direction of insertion of the tube or hose, said return ring engaging an inner conical surface in the coupling with a conical surface, oppositely tapered relatively to the conical surface against which the clamping ring is in engagement, and the return ring has a central aperture which is smaller than the external dimension of the tube or hose, and it is expandable, in order to be expanded and be moved along the conical surface when the tube or hose is pushed into the housing of the coupling and forced through the return ring.

During insertion of the tube the tube will be forced through the return ring and expand it. Due to the engagement against the conical surface the expansion of the return ring will force it to move along the conical surface, in the direction towards the clamping ring. Initially, the return ring may lye axially near the clamping ring. Alternatively, the sealing ring, for instance an O-ring, may be situated between the return ring and the clamping ring. In such a case it may be advantageous that a pressure ring is situated between the return ring and the O-ring, whereby the expansion of the return ring does not lead to rubbing thereof against the O-ring. The axial movement of the return ring forces the clamping ring and possibly the sealing ring in the tapering direction of the conical surface, i.e. towards the smallest part of the conical surface of the clamping ring, whereby the clamping ring and possibly the sealing ring are compressed.

In the following will, with reference to the accompanying drawing, be explained more detailed examples of embodiments of the invention.

### Explanation of the drawings.

- Fig. 1: shows a longitudinal section through a coupling according to the invention, comprising a coupling housing with a throughgoing cavity, a clamping ring provided in the cavity, adapted for retaining of a tube or hose inserted in the cavity and a ring for sealing between the coupled tube or hose and the cavity, said coupling also containing a pressure ring and a return ring.
- Fig. 2: shows a longitudinal section through another coupling according to the invention, comprising a coupling housing with a throughgoing cavity, a clamping ring provided in the cavity, adapted for retaining of a tube or hose inserted in the cavity and a ring for sealing between the coupled tube or hose and the cavity, said coupling also containing a return ring and a pressure ring between the return ring and the clamping ring.
- Fig. 3: shows a return ring that may be included in each of the embodiments shown in the Figs. 1 and 2, seen in a longitudinal section through the coupling, along the line A - A in Fig. 4.
- Fig. 4: shows the return ring in Fig. 3, seen in a top view.

### Description of embodiments.

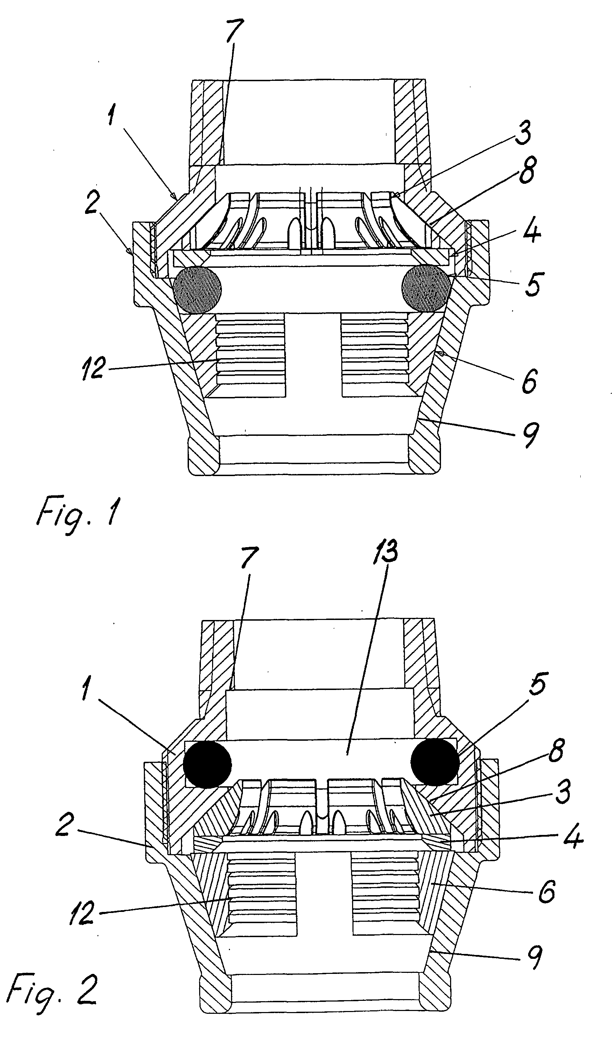

The coupling shown in Fig. 1 comprises a coupling housing, which in the example shown is composed of two housing parts 1 and 2 being screwed together. The coupling housing contains a damping ring 6, in engagement against a conical surface 9. A sealing ring 5, shown as an O-ring, is shown in engagement with the same conical surface 9. A return ring 3 is situated axially behind the sealing ring 5 as seen in the direction of insertion of the tube or hose. Between the return ring 3 and the sealing ring 5 is mounted a pressure ring 4. The damping ring 6 is shown formed with a split and with internal, circumferential edges 12 for cutting into the tube being inserted.

A not shown tube (or a hose) may be inserted into the coupling housing from the end facing downwardly on the drawing, and may be moved to end abutment against an inner step 7.

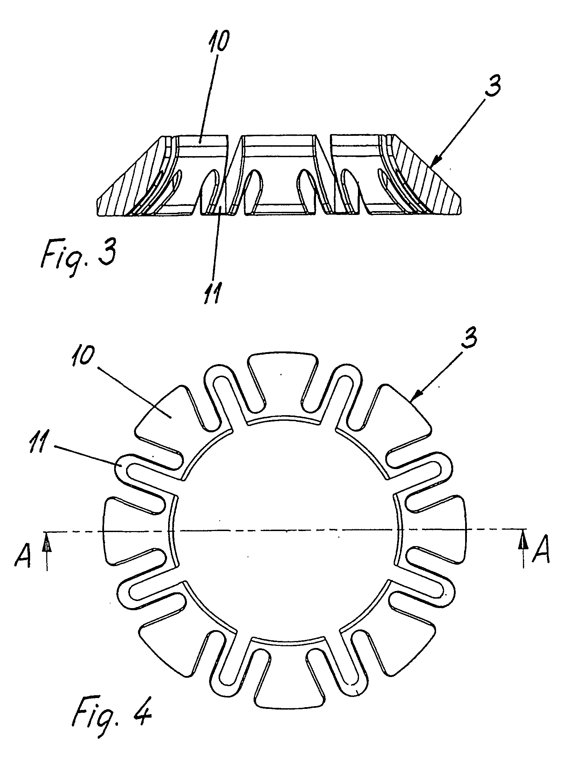

The central aperture in the return ring 3 is smaller than the tube dimension, and forcing in of the tube, therefore, will expand the return ring 3, which is formed such that it is expandable. This appears at best from Fig. 3. When the return ring is expanded, it will be forced to move along the conical surface 8, which means that it also is moved axially in the direction towards the clamping ring 6. In order to avoid that the return ring 3 rubs against the O-ring 5 in the embodiment shown in Fig. 1, the pressure ring 4 is placed therebetween, whereby the return ring 3 slides against the pressure ring 4 when being expanded.

Thus, insertion of the tube will cause, for the embodiment of Fig. 1, that the O-ring 5 and the clamping ring 6 will be subjected to a force which causes a certain movement of these rings in the direction of taper of the conical surface 9, which means that the O-ring ₅ and the clamping ring 6 are compressed around the tube when the tube is forced through the return ring 3 and expands it.

Fig. 2 shows an alternative solution, which also comprises a coupling housing formed of two housing parts 1 and 2 being screwed together, with a clamping ring 6 in engagement against a conical surface 9. Here, however, the O-ring 5 is placed behind the return ring 3, as seen in the direction of insertion of the tube or hose, in an annular groove 13. Also here the return ring 3 is in engagement with a conical surface 8, having a taper oppositely of the conical surface 9. A pressure ring 4 is shown mounted between the return ring 3 and the clamping ring 6. The pressure ring 4 may be omitted, whereby the return ring 3 is lying directly against the clamping ring 6. Here, the O-ring 5 is not influenced by the return ring 3. The functioning of the return ring 3 is the same as for the embodiment shown in Fig. 1, except that it only influences the clamping ring 6, and not the O-ring 5.

As it appears from the Figs. 3 and 4, the return ring 3 may be formed with a plurality of segments 10, which are mutually coupled through flexible arch portions 11 which make the return ring 3 sufficiently expandable.

The tube coupling according to the invention is particularly advantageous for coupling of plastics tubes, but may of course be used for coupling of any other tube or hose having a sufficient stiffness in order to be forced into the coupling housing. The coupling housing may be made of metal, for instance brass, or of plastics or composite material. The same applies to the clamping ring 6 and the pressure ring 4 (when included). The sealing ring 5 will normally be made of rubber or plastics, for instance neoprene, without this being mentioned as a limitation.

The return ring 3 must be able to be expanded when it is forced along the respective conical surface 8 during insertion of a tube or hose, but it may of course be shaped differently than shown.

The coupling may be adapted to be screwed onto another member, for instance a pipe, with the end being opposite of the end adapted for insertion of a tube, but the coupling housing may also be adapted for insertion of tubes from both ends. Then, the coupling may appropriately be symmetrical about a transverse central plane and contain two sets of the rings mentioned, with corresponding conical surfaces and possible annular grooves.

## Claims

1. A coupling for connection of a tube or hose by pushing-in, comprising a coupling housing (1, 2) formed of one single part or of two parts which are screwed together, a clamping ring (6) and a sealing (5), for instance an Oring, where at least the clamping ring (6) is in engagement with an inner coni-cal surface (9) in the coupling housing (1, 2), **characterised in that** a return ring (3) is provided in the housing (1, 2) behind the clamping ring (6) as seen in the direction of insertion of the tube or hose, said return ring (3) engaging, with a conical surface, an inner conical surface (8) in the coupling, oppositely tapered relatively to the conical surface (9) against which the damping ring (6) is in engagement, and that the return ring (3) has a central aperture which is smaller than the external dimension of the tube or hose, and it is expandable, in order to be expanded and be moved along the conical surface (8) when the tube or hose is pushed into the housing of the coupling and forced through the return ring (3).

2. A coupling as defined in claim 1, in which the return ring (3) initially is situated axially near the clamping ring (6).

3. A coupling as defined in claim 1, in which the sealing ring (5) is situated between the clamping ring (6) and the return ring (3), whereby a pressure ring (4) mainly fills an axial space between the return ring and the sealing ring.

4. A coupling as defined in claim 1, in which the sealing ring (5) is situated in an annular groove (13) axially inside of the return ring (3).

5. A coupling as defined in one of the claims 1 - 4, in which the return ring (3) is formed with segments (10), which are successively coupled together through flexible arch portions (11).

## Patentansprüche

1. Kupplung zur Verbindung eines Rohrs oder Schlauchs durch Einschieben, mit einem Kupplungsgehäuse (1, 2), das aus einem einzigen Teil besteht oder aus zwei Teilen, die zusammengeschraubt sind, einem Klemmring (6) und einer Dichtung (5), beispielsweise einem O-Ring, wobei sich zumindest der Klemmring (6) mit einer inneren konischen Oberfläche (9) im Kupplungsgehäuse (1, 2) in Eingriff befindet, **dadurch gekennzeichnet, daß** im Gehäuse (1, 2) in Richtung des Einführens des Rohrs oder Schlauchs gesehen hinter dem Klemmring (6) ein Rückführring (3) vorgesehen ist, wobei der Rückführring (3) mit einer konischen Oberfläche mit einer inneren konischen Oberfläche (8) in der Kupplung in Eingriff steht, die relativ zur konischen Oberfläche (9), gegen die sich der Klemmring (6) in Eingriff befindet, entgegengesetzt geneigt ist, und daß der Rückführring (3) eine zentrale Öffnung aufweist, die kleiner ist als die Außenabmessung des Rohrs oder Schlauchs, und die expandierbar ist, um dann, wenn das Rohr oder der Schlauch in das Gehäuse der Kupplung hineingeschoben wird und durch den Rückführring (3) hindurchgezwungen wird, expandiert und entlang der konischen Oberfläche (8) bewegt wird.

2. Kupplung nach Anspruch 1, bei der der Rückführring (3) anfänglich axial nahe dem Klemmring (6) angeordnet ist.

3. Kupplung nach Anspruch 1, bei der der Dichtring (5) zwischen dem Klemmring (6) und dem Rückführring (3) angeordnet ist, wobei ein Druckring (4) einen axialen Raum zwischen dem Rückführring und dem Dichtring im Wesentlichen füllt.

4. Kupplung nach Anspruch 1, bei der der Dichtring (5) in einer ringförmigen Nut (13) axial innerhalb des Rückführrings (3) angeordnet ist.

5. Kupplung nach einem der Ansprüche 1 - 4, bei der der Rückführring (3) mit Segmenten (10) ausgebildet ist, die nacheinander über flexible Bogenabschnitte (11) zusammen gekuppelt sind.

## Revendications

1. Raccord pour le raccordement d'un tube ou d'un flexible par poussée, comprenant un logement de raccord (1, 2) formé d'une seule partie ou de deux parties qui sont vissées ensemble, d'une bague de serrage (6) et d'une garniture d'étanchéité (5), par exemple un joint torique, où au moins la bague de serrage (6) est en prise avec une surface conique intérieure (9) dans le logement de raccord (1, 2), **caractérisé en ce qu'**une bague de rappel (3) est placée dans le logement de raccord (1, 2) derrière la bague de serrage (6) vue dans la direction d'insertion du tube ou du flexible, ladite bague de rappel (3) venant en prise, avec une surface conique, avec une surface conique intérieure (8) dans le raccord, inclinée dans le sens inverse de la surface conique (9) contre laquelle la bague de serrage (6) est en prise, et **en ce que** la bague de rappel (3) a une ouverture centrale qui est plus petite que la dimension extérieure du tube ou du flexible, et qu'elle est extensible, afin d'être agrandie et déplacée le long de la surface conique (8) quand le tube ou le flexible est poussé dans le logement du raccord et forcé à travers la bague de rappel (3).

2. Raccord selon la revendication 1, dans lequel la bague de rappel (3) est initialement située axialement près de la bague de serrage (6).

3. Raccord selon la revendication 1, dans lequel la bague d'étanchéité (5) est située entre la bague de serrage (6) et la bague de rappel (3), moyennant quoi une bague de pression (4) remplit principalement un espace axial entre la bague de rappel et la bague d'étanchéité.

4. Raccord selon la revendication 1, dans lequel la bague d'étanchéité (5) est située dans une rainure annulaire (13) axialement à l'intérieur de la bague de rappel (3).

5. Raccord selon l'une quelconque des revendications 1 à 4, dans lequel la bague de rappel (3) est formée avec des segments (10), qui sont successivement raccordés ensemble par des parties d'arc élastiques (11).
